# EUROPÄISCHE PATENTSCHRIFT

(11) **EP 0 997 265 B1**
(45) Veröffentlichungstag und Bekanntmachung des Hinweises auf die Patenterteilung: **23.01.2008**
(21) Anmeldenummer: 99120456.1
(22) Anmeldetag: 14.10.1999
(51) Int. Cl.: B32B 5/18, B32B 5/24, B32B 27/40, B32B 7/12, B60R 13/02, B32B 38/08

(54) **Verfahren zur Herstellung einer Dachversteifung für Fahrzeuge und Dachversteifung**
Roof stiffener for vehicles and method of manufacturing the same
Procédé de fabrication d'un renfort de toit pour véhicules et renfort fabriqué par ce procédé

(30) Priorität: 16.10.1998 DE 19847795
(43) Veröffentlichungstag der Anmeldung: 03.05.2000
(73) Patentinhaber: Johnson Controls Headliner GmbH, 42285 Wuppertal (DE)
(72) Erfinder: Härtling, Peter, 66740 Saarlouis (DE); Königer, Uwe, 66798 Wallerfangen (DE); Bodwing, Franz-Josef, 66740 Saarlouis (DE); Louis, Denis, 66787 Wadgassen (DE)
(74) Vertreter: Patentanwälte Thömen & Körner

(56) Entgegenhaltungen:
- EP-A- 0 276 465
- EP-A- 0 825 066
- US-A- 4 451 310
- US-A- 5 486 256

## Beschreibung

Die Erfindung betrifft ein Verfahren zur Herstellung einer Dachversteifung für Fahrzeuge und eine nach dem Verfahren hergestellte Dachversteifung.

Aus der EP 0 825 066 A2 ist ein Verfahren zur Herstellung einer Dachversteifung für Fahrzeuge und eine nach dem Verfahren hergestellte Dachversteifung bekannt, bei der zunächst ein planes mehrschichtiges Halbzeug aus einer mittleren Hartschaumschicht und zwei äußeren Kraftlinern hergestellt, dieses anschließend mittig gespalten und eines der beiden Teile des gespaltenen Halbzeugs dann auf der freiliegenden Seite der Hartschaumschicht mit einem einzelnen Kraftliner über eine Klebeschicht verbunden wird. Ehe jedoch die Klebeschicht abbindet, wird das durch den Kraftliner ergänzte Material in einem der Wölbung und Kontur der Dachhaut entsprechendem Formwerkzeug auf die endgültige Form umgeformt und in dieser Form der Klebstoff ausgehärtet. Das Umformen des mehrschichtigen Materials wird dadurch möglich, daß das gespaltene Material nur auf einer Seite einen fest mit der Schaumschicht verbundenen Kraftliner besitzt, so daß eine wesentlich geringere Steifigkeit vorliegt, als bei einer beidseitig mit Kraftlinern fest verbundenen Schaumschicht. Die Steifigkeit des im Formwerkzeug in die Kontur der Dachwölbung umgeformten Materials tritt erst dann ein, wenn auch die Klebeschicht des zusätzlichen Kraftliners unter Wärmeeinwirkung abgebunden hat.

Da beim bekannten Material bereits vor dem Umformvorgang eine Seite der Hartschaumschicht fest mit einem Kraftliner verbunden ist, ergibt sich beim Umformvorgang ein unsymmetrisches Dehnungs- und Stauchverhalten des Schaummaterials. Diese Eigenschaft beinhaltet unter Umständen die Gefahr eines nachträglichen Verzugs des Bauteils. Ferner besitzt die aus Hartschaum bestehende Schaumschicht beim bekannten Material ein relativ hohes Flächengewicht, was durch den Herstellungsprozeß auf einer Bandschäumanlage begründet ist.

Aus der DE 196 32 054 ist ein Verfahren zur Innenmontage einer Dachversteifung an der Dachhaut eines Fahrzeugs durch Verkleben der Dachversteifung mit der Dachhaut bekannt. Die Dachversteifung wird im äußeren Bereich ihrer Montagefläche mit einem ringsum verlaufenden, geschlossenen Klebstoffband und der innerhalb dieses Klebstoffbandes liegende mittlere Bereich mit wenigstens einem mehrfach unterbrochenen Klebstoffband versehen. Die Dachversteifung wird soweit gegen die Dachhaut gedrückt, bis das ringsum verlaufende, geschlossene Klebstoffband vollständig an der Dachhaut anliegt und abdichtet. Durch wenigstens ein innerhalb des vom geschlossenen Klebstoffband umgebenen Bereichs angeordnetes Loch wird ein Unterdruck zwischen der Dachversteifung und der Dachhaut erzeugt und aufrechterhalten, bis die Dachversteifung an der Dachhaut anliegt und der Klebstoff angezogen hat.

In der DE 40 35 822 wird ein Innenausstattungsteil für Fahrzeuge beschrieben, das aus einer formbildenden Schaumschicht, einer Polsterschicht, sowie einer Oberflächenschicht aus einer Kunststoffolie besteht. Die Polsterschicht wird entweder durch ein Textilvlies oder eine Beflockungsschicht gebildet. Außerdem sind in der DE 40 35 822 verschiedene Herstellverfahren für das Innenaustattungsteil für Fahrzeuge beschrieben. Unter anderem werden die Flocken auf die noch zähflüssige, durch Rotationssintern erzeugte Kunststoffolie aufgebracht.

Aus der EP 0 364 102 ist ein Dachhimmel für Fahrzeuge bestehend aus einer Trägerschicht aus Wellfaserpappe, aus einer verhältnismäßig harten bis mittelharten Schaumstoffschicht und einem dreischichtigen Laminat bekannt.

Das Laminat setzt sich aus einer undurchlässigen Trägerfolie, aus einer offenzelligen weichelastischen Schaumstoffschicht und aus einer Oberflächenschicht aus Textilstoff zusammen.

Zur Herstellung des Dachhimmels wird die Trägerschicht aus Wellfaserpappe in eine Negativform eines Ausformwerkzeugs gelegt. Daraufhin wird eine schaumstoffbildende Chemiekalie auf die Trägerschicht aufgetragen und mit dem dreischichtigen Laminat bedeckt. Beim Ausformen kommt es zum Verschäumen der schaumstoffbildenden Chemikalie, so daß der dabei entstehende Schaumstoff eine Schicht zwischen der Trägerschicht und der Trägerfolie des dreischichtigen Laminats darstellt.

EP 0 276 465 A2 offenbart ein Verfahren zur Herstellung von leichten, flächigen Formteilen wie Dachhimmel. Ein Dachhimmel ist ein Dekorationselement ohne dachversteifende Eigenschaften. Die Dachhimmel werden durch Behandeln von porösen Materialien, vorzugsweise halbharten Polyurethan-Schaumstoffen mit einer wässrigen Dispersion oder Emulsion einer Isocyanatverbindung hergestellt. Die so behandelten, porösen Materialien können ein oder beidseitig mit Versteifungs- und/oder Dekormaterialien versehen werden, wobei mindestens eine Deckschicht aus einem Wasserdampf durchlässigen Material bestehen muss, falls die Formgebung und Beschichtung gleichzeitig durchgeführt wird. Zum Aufbringen der Versteifungs- und/oder Dekormaterialien werden diese in einem separaten Verfahrenschritt zunächst in ein Formwerkzeug eingelegt und mit Hilfe eines zusätzlich aufgebrachten Klebers unter Druck mit den porösen Materialien verbunden

US 4 451 310 offenbart ein Verfahren zur Herstellung leichter, isolierender, biegsamer, steifer oder halbsteifer Elemente in Tafeln oder Stücken verschiedener Stärken, beispielsweise Karosserien, Instrumententafeln, Tischplatten oder Karosserieauskleidungen. Dazu wird ein elastisches poröses Material mit einer Isocyanatverbindung behandelt. Das Aussehen der Oberfläche des Materials kann durch einseitiges oder beidseitiges Aufbringen eines Überzugsmittel wie Papier, Karton, Watte, Leinen, eine Gewebeschicht oder eine dünne Kunststofffolie verändert werden, wobei die Isocyanatverbindung auch als Haftmittel wirkt.

US 5 486 256 offenbart ein Verfahren zur Herstellung eines Dachhimmels aus einem flexiblen Laminat mit mehreren Schichten. Zur Herstellung des Laminats wird eine offenzellige Polyurethanschaumschicht mit einem Klebstoffharz imprägniert, das mittels eines Kalanders in der Schaumschicht verteilt wird. Anschließend wird die imprägnierte Schaumschicht von zwei nicht gewebten Schichten aus Glasfasern eingekeilt. Auf eine der Glasfaserschichten wird dann eine Folie aus einem thermoplastischen Klebstoff, vorzugsweise Ethylen-AcrylsäureCopolymer, gelegt, welche als Klebstoff für eine weitere nicht gewebte Polyester-Reyon-Schicht dient. Auf die andere Glasfaserschicht des Laminats wird ebenfalls eine Folie aus einem thermoplastischen Klebstoff, vorzugsweise EthylenAcrylsäure-Copolymer, gelegt, die als Klebstoff für eine zum Innenraum des Fahrzeugs weisenden Dekorschicht aus Gewebe oder Vinylmaterial dient.

Der Erfindung liegt die Aufgabe zugrunde, ein Verfahren zur Herstellung einer Dachversteifung für Fahrzeuge sowie eine nach dem Verfahren hergestellte Dachversteifung selbst dahingehend zu verbessern, daß eine weitere Gewichtsreduzierung und eine größere Formbeständigkeit erzielt wird.

Diese Aufgabe wird bei einem Verfahren zur Herstellung einer Dachversteifung für Fahrzeuge nach dem Oberbegriff des Anspruchs 1 oder des Anspruchs 4 durch die im Kennzeichen des Anspruchs 1 angegebenen Merkmale gelöst und bei einer nach dem Verfahren hergestellten Dachversteifung durch die im Kennzeichen des Anspruchs 7 angegebenen Merkmale gelöst. Weiterbildungen und vorteilhafte Ausgestaltungen ergeben sich aus den Unteransprüchen.

Die Erfindung ermöglicht die Verwendung eines sehr leichten und biegsamen Schaumes, so daß im nicht ausgehärteten Zustand die geschäumte Platte oder das geschäumte Bandmaterial ohne wesentliche Rückstellkraft in die gewünschte Form gebracht werden kann. Die Steifigkeit des Schaumes, die dann mit mittelhartem oder hartem Schaum vergleichbar ist, stellt sich später erst nach dem Aushärten mit dem Härte- und Klebemittel ein. Das Härte- und Klebemittel wird dabei gleichzeitig auch zur Verklebung der geschäumten Platte oder des geschäumten Bandmaterials mit den Deckschichten verwendet. Dadurch werden durch den Einsatz ein und desselben Materials zwei Aufgaben gelöst, nämlich sowohl die Versteifung des Schaumes als auch die Bindung der Deckschichten an den Schaum.

Die Zugabe eines Härte- und Klebemittels ermöglicht zudem, über den Weg der Dosierung auch die Steifigkeit des Schaumes den Erfordernissen anzupassen. Gleichzeitig mit der Steifigkeit geht auch die Dämpfungswirkung für bestimmte Frequenzen einher, so daß auch hier eine Anpassung der akustischen Verhältnisse im Fahrzeug ermöglicht wird.

Durch die Verwendung des Weichschaumes ergibt sich auch eine Gewichts- und Materialeinsparung und somit auch eine Reduzierung der Kosten. Gleichzeitig wird aber auch ein ein späteres Umformen erleichterndes mechanisches Verhalten erzielt, da beim Umformvorgang auf die endgültige Form noch keine Verbindung mit einem der Deckschichten besteht. Das Schaummaterial kann sich somit entlang einer neutralen Mittelfläche verformen, wobei dann die im Krümmungsbereich mehr zum Krümmungszentrum liegenden Zonen gestaucht werden, während die vom Krümmungszentrum abgewandten Zonen gedehnt werden. Nach der Verbindung mit den äußeren Deckschichten hat das fertige Material daher weniger das Bestreben, wieder in seine ursprüngliche ebene Form zurückzukehren.

Ein weiterer Vorteil besteht darin, daß die Deckschichten bei Verwendung von Kraftlinern keine wasserundurchlässige Beschichtung zur Schaumschicht hin benötigen. Beim Bandschaumverfahren war dies nämlich erforderlich, da wegen der Feuchtigkeit im Papier der Kraftliner die Gefahr einer Lunkerbildung in der Schaumschicht bestand. Der Verzicht auf diese wasserundurchlässige Schicht bewirkt eine weitere Material- und Kosteneinsparung. Da die wasserundurchlässige Schicht zwischen dem Kraftliner und der Schaumschicht beim Stand der Technik nur an demjenigen Kraftliner erforderlich war, der bereits bei Herstellung des Vorproduktes im Bandschaumverfahren benötigt wurde, ergab sich hier eine zusätzliche Asymmetrie, denn der später über einen Kleber befestigte Kraftliner konnte auf eine solche wasserundurchlässige Schicht verzichten. Bei der Erfindung entfällt von vorn herein diese Asymmetrie, so daß auch von daher die Voraussetzungen für ein symmetrisches mechanisches Verhalten gegeben sind.

Gemäß einer Weiterbildung wird die geschäumte Platte oder das geschäumte Bandmaterial durch ein das Härte- und Klebemittel enthaltende Bad geführt und vollständig getränkt. Anschließend wird es über einen ersten Kalander mit einstellbarer Spaltbreite geführt, wodurch das getränkte Bandmaterial gewalkt und überschüssiges Härte- und Klebemittel herausgedrückt wird. Danach werden auf beiden Flachseiten der geschäumten Platte oder des geschäumten Bandmaterials Deckschichten zugeführt und diese Deckschichten in einem zweiten Kalander miteinander in Kontakt gebracht. Schließlich wird das soweit erzeugte mehrschichtige Material einem beheizten Formwerkzeug zugeführt, wo unter der Wärmeeinwirkung das Härte- und Klebemittel sowohl die geschäumte Platte oder das geschäumte Bandmaterial versteift als auch ein Klebebindung zwischen den Deckschichten und der geschäumten Platte oder dem geschäumten Bandmaterial herstellt.

Die Verfahrensschritte ermöglichen eine kontinuierliche Fertigung, wobei durch die Kalander sowohl eine Dosierung des im Überschuß zugeführten Härte- und Klebemittels ermöglicht wird, als auch ein Walken und damit eine innige Verteilung des Härte- und Klebemittels in der geschäumten Platte oder dem geschäumten Bandmaterial. Dabei kann das Härte- und Klebemittel, das nach Durchlaufen des ersten Kalanders wieder aus dem Schaum herausgedrückt wird, erneut dem Bad zugeführt und wieder verwendet werden.

Im zweiten Kalander erfolgt eine weitere Vermischung und Verteilung des Härte- und Klebemittels innerhalb der Schaumschicht und ferner ein Andrücken der Deckschichten an die geschäumte Platte oder das geschäumte Bandmaterial. Gleichzeitig dienen die Deckschichten aber auch dazu, den zweiten Kalander gegen den Kontakt mit dem Härte- und Klebemittel abzuschirmen.

Vorzugsweise wird die geschäumte Platte oder das geschäumte Bandmaterial zwischen dem ersten und zweiten Kalander mit einem Katalysator benetzt, der beim Durchlaufen des zweiten Kalanders durch Walken mit dem Härte- und Klebemittel vermischt und über der Breite der geschäumten Platte oder des geschäumten Bandmaterials verteilt wird. Im anschließenden Formwerkzeug wird die Aushärtung des Härte- und Klebemittels beschleunigt.

Die Zuführung des Katalysators erst hinter dem ersten Kalander bewirkt, daß das im ersten Kalander herausgequetschte überschüssige Härte- und Klebemittel noch nicht mit dem Katalysator kontaminiert ist und daher nicht in unerwünschter Weise vorzeitig für eine Wiederverwendung unbrauchbar wird.

Die Verwendung des Katalysators an sich führt dazu, daß die Aushärtung im Formwerkzeug beschleunigt wird und dadurch die Eingliederung in einen fortlaufenden Prozeß begünstigt wird. Es ist dann nur ein relativ kleiner Materialpuffer erforderlich, um den diskontinuierlichen Aufenthalt des Materials im Formwerkzeug an den kontinuierlichen Durchlauf des bandförmigen Materials durch die Kalander anzupassen.

Gemäß Anspruch 4 ist vorgesehen, daß die geschäumte Platte oder das geschäumte Bandmaterial einseitig eine Deckschicht aufgelegt wird. Das auf diese Weise hergestellte, sogenannte Halbsandwichelement erhält seine endgültige Formgebung durch Verklebung der unbeschichteten Seite der Platte oder des geschäumten Bandmaterials mit der Dachhaut.

Gegenüber dem zuvor genannten Sandwichelement entfällt eine Deckschicht. Dadurch ergibt sich eine weitere signifikante Gewichts- und Materialeinsparung und somit auch eine Reduzierung der Kosten.

Die Steifigkeit des Schaumes kann über die dosierte Zugabe eines Härte- und Klebemittels den Erfordernissen angepaßt werden. Sie entspricht nach dem Aushärten etwa der eines halbharten Schaumes.

Die einseitig mit einer Deckschicht beschichtete Platte oder das einseitig mit einer Deckschicht beschichtete geschäumte Bandmaterial besitzt allerdings eine wesentlich geringere Steifigkeit als eine vergleichbare, beidseitig mit Deckschichten fest verbundene Schaumstoffschicht.

Daraus ergibt sich, daß das Halbsandwichelement ohne vorherige Formgebung und ohne auftretende wesentliche Rückstellkraft auch im ausgehärteten Zustand an jede beliebige Dachhaut angepaßt und in die endgültige Form gebracht werden kann.

Das Schaummaterial läßt sich also trotz Verbindung mit einer Deckschicht entlang einer relativ neutralen Mittelfläche verformen, wobei das Halbsandwichelement kein Bestreben hat, in eine bestimmte Form, beispielsweise in die ursprünglichplanare, keine Kontur aufweisende oder in die vorgeformte, eine Kontur aufweisende Form, überzugehen, so daß für den späteren Umformvorgang auf die endgültige Form ein erleichterndes mechanisches Verhalten erzielt wird.

Somit ist es bei diesem Verfahren möglich, ein Formteil sowohl als planares Halbsandwichelement ohne Kontur als auch als vorgeformtes Halbsandwichelement mit Kontur herzustellen, ohne daß sich das positive mechanische Verhalten des Halbsandwichelements verändert.

Die Steifigkeit des Halbsandwichelements wird durch Verkleben mit der Dachhaut erreicht, wobei der Verbund von Dachhaut und Halbsandwichelement dann ein Sandwichelement bildet. Erst dadurch erhält das Halbsandwichelement seine endgültige Form.

Die mechanischen Eigenschaften des fertigen Verbundes aus Halbsandwichelement und Dachhaut entsprechen überraschenderweise denen einer beidseitig mit Deckschichten fest verbundenen Schaumstoffschicht.

Die Anbringung des Halbsandwichelements an die Dachhaut kann nach herkömmlichen Verfahren erfolgen. Als besonders vorteilhaft hat sich die Anbringung gemäß des in der DE 196 32 054 beschriebenen Verfahrens herausgestellt.

Das erfindungsgemäße Verfahren hat neben der Gewichtsreduzierung der Dachversteifung bei mindestens gleichbleibenden mechanischen Eigenschaften außerdem den Vorteil, daß aufwendige Werkzeuge zur Umformung und die damit verbundenen Kosten eingespart werden können.

Erfindungsgemäß ist das Material der geschäumten Platte oder des geschäumten Bandmaterials ein Polyurethanweichschaum auf Polyesterbasis. Dieser läßt sich leichter besonders auf kleine Krümmungsradien umformen und besitzt eine geringere Rückstellkraft. Ein gemäß Anspruch 4 hergestelltes Halbsandwichelement läßt sich leichter besonders auf kleine Krümmungsradien vorformen und aufgrund seiner geringeren Rückstellkraft mit der Dachhaut verkleben. Durch das Härte- und Klebemittel wird bei der Aushärtung und Verklebung gleichzeitig auch der Schaum entsprechend den Erfordernissen versteift. Auf diese Weise werden die Vorteile eines weichen Schaumes bei der Umformung bzw. Vorformung mit denen eines härteren Schaumes, vorzugsweise eines halbharten Schaumes, für die Dachaussteifung miteinander kombiniert.

Als Härte- und Klebemittel eignet sich Diisocyanat. Dieser Stoff härtet unter Wärmeeinwirkung zu Polyharnstoff aus und eignet sich damit besonders zur Versteifung des Schaums.

Als Katalysator hat sich ein Gemisch aus Wasser und Amin im Verhältnis 10 zu 1 bewährt.

Erfindungsgemäß ist die Deckschicht ein Kraftliner. Dieser kann auf hohe Zugfestigkeit und geringes Dehnungsverhalten ausgelegt werden. Dadurch ist die Formstabilität des mehrschichtigen Produktes gewährleistet. Dementsprechend läßt sich das gemäß Anspruch 4 hergestellte Halbsandwichelement an unterschiedlich geformte Dachhäute anpassen, wobei die Formstabilität des Verbundes aus Dachhaut und Halbsandwichelement gewährleistet ist.

Die Deckschicht kann außen und innen mit Beschichtungen aus Polyolefinen versehen sein. Dies verhindert von außen ein Eindringen von Feuchtigkeit in die Kraftliner und das Schaummaterial, so daß dessen mechanische und physikalische Eigenschaften über die Nutzungsdauer weitgehend konstant bleiben. Bei der gemäß Anspruch 4 hergestellten Dachversteifung wird bei der zur Dachhaut weisenden, ohne Deckschicht versehenen Seite des Verbundes das Eindringen von Feuchtigkeit in das Schaummaterial durch die wasserundurchlässige Dachhaut erreicht, so daß auch hier die mechanischen und physikalischen Eigenschaften nicht beeinträchtigt werden.

Durch die zusätzlichen inneren Schichten wird über eine Reaktion mit dem Härte- und Klebemittel außerdem die Bindung der Deckschicht mit der geschäumten Platte oder dem geschäumten Bandmaterial verbessert. Bei einer nach Anspruch 4 hergestellten Dachversteifung ist dieses bei der zur Dachhaut weisenden, ohne Deckschicht versehenen Seite des Verbundes unnötig, weil die Bindung der Dachhaut mit der geschäumten Platte oder dem geschäumten Bandmaterial nicht über eine Reaktion mit dem Härte- und Klebemittel erfolgt.

Vorzugsweise weist die Platte aus geschäumtem Material eine Dicke zwischen 5 mm und 10 mm auf. Da das Material aus einem Block heraus geschnitten wurde, besteht hier ein völlig homogener Aufbau, so daß die durch den Schaum bewirkten akustischen und thermischen Dämpfungseigenschaften über die gesamte Dicke des Materials homogen verteilt sind und damit auch eine verhältnismäßig geringe Dicke optimal genutzt werden kann.

Die Platte aus geschäumtem Material besitzt ein ursprüngliches Raumgewicht zwischen 15 kg/m³ und 25 kg/m³, vorzugsweise von 21 kg/m³. Dieser geringe Gewichtsbereich wird erst durch Möglichkeit erreicht, Weichschaum zu verwenden. Demgegenüber liegt die Untergrenze des Raumgewichts bei einem Bandschäumverfahren für Hartschaum bei etwa 38 kg/m³. Dieser Wert kann bei der Erfindung also deutlich unterschritten werden.

Die jeweils verwendete Deckschicht kann ein Flächengewicht zwischen 160 g/m² und 200 g/m² aufweisen. Vorzugsweise beträgt das Flächengewicht bei Verwendung von Kraftlinern 186 g/m². Mit diesem Flächengewicht ist sichergestellt, daß die jeweilige Deckschicht, die auch wesentlich zur Steifigkeit des fertigen Materials in Verbindung mit der Schaumschicht beiträgt, eine ausreichende Stabilität besitzt.

Die wasserundurchlässige äußere und innere Beschichtung aus Polyolefinen kann ein Flächengewicht zwischen 10 g/m² und 30 g/m² aufweisen. Vorzugsweise liegt der Wert bei 20 g/m². Hierdurch wird eine ausreichende Sperre gegen Feuchtigkeit von außen und eine ausreichende Bindefähigkeit mit dem Schaum nach innen erreicht.

Nachfolgend wird die Erfindung anhand der Zeichnung erläutert. In der Zeichnung zeigen:
- Fig. 1: einen Querschnitt durch einen Dachaufbau mit der nach einem Verfahren der Ansprüche 1 bis 4 hergestellten Dachversteifung,
- Fig. 2: eine prinzipielle Darstellung des Schichtaufbaus einer nach einem Verfahren der Ansprüche 1 bis 3 hergestellten Dachversteifung
- Fig. 3: eine Anlage zur Herstellung der nach einem Verfahren der Ansprüche 1 bis 3 hergestellten Dachversteifung und

- Fig. 4: eine prinzipielle Darstellung des Schichtaufbaus einer nach einem Verfahren gemäß Anspruch 4 hergestellten Dachversteifung und einer Dachhaut.

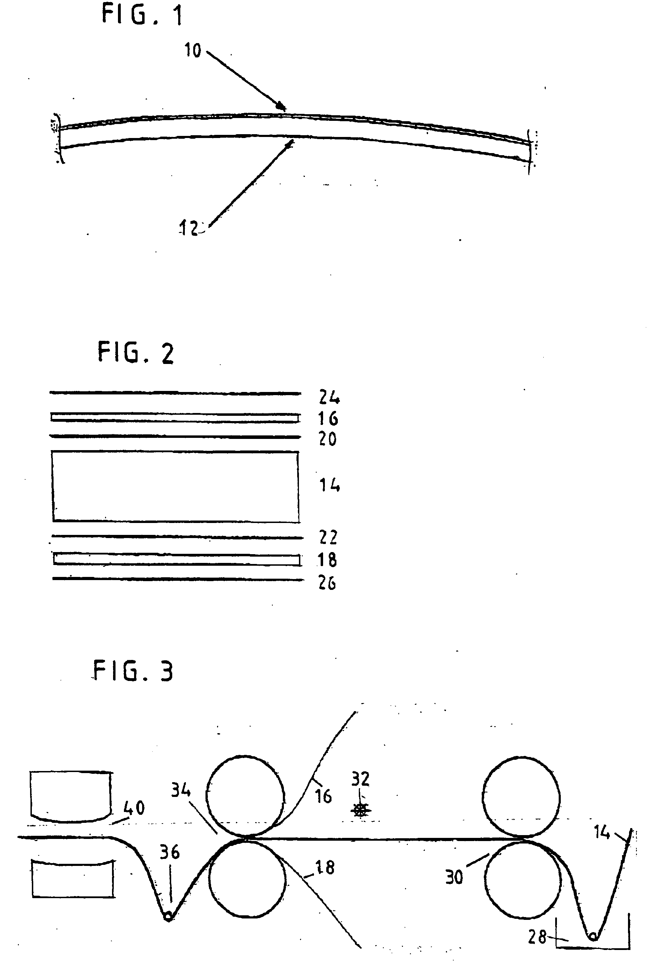

Fig. 1 zeigt einen Querschnitt durch einen Dachaufbau mit der erfindungsgemäßen Dachversteifung. Das Dach besteht dabei aus einer außenliegenden Dachhaut 10, die in ihrer Form von der Karosserieform vorgegeben ist, und der zum Fahreuginnenraum weisenden Dachversteifung 12. Die Dachversteifung 12 ist in ihrer Form an die Form des Daches 10 angepaßt und mit diesem ganz- oder teilflächig verbunden, vorzugsweise verklebt.

Fig. 2 zeigt eine prinzipielle Darstellung des Schichtaufbaus einer nach einem Verfahren der Ansprüche 1 bis 3 hergestellten Dachversteifung. Zur besseren Übersicht sind die Schichten getrennt gezeichnet. In Wirklichkeit schließen sie sich natürlich bündig aneinander an.

Die in Fig. 2 dargestellte Dachversteifung 12 besteht aus einer inneren Platte 14 aus Polyurethanschaum und zwei Deckschichten 16, 18. Die Deckschichten 16, 18 tragen sowohl zur Seite der inneren Platte 14 hin als auch auf ihrer nach außen weisenden Seite Beschichtungen. Die Beschichtungen 20, 22 können aus demselben Material wie die Beschichtungen 24, 26 sein, z. B. aus Polyolefinen. Während die nach innen weisenden Beschichtungen 20, 22, als Klebeschichten mit der Platte 14 aus Polyurethanschaum dienen, nachdem ein den Schaum benetzendes Härte- und Klebemittel mit den Beschichtungen 20, 22 reagiert hat, dienen die äußeren Beschichtungen 24, 26 als Wassersperre.

Fig. 3 zeigt eine Anlage zur Herstellung der erfindungsgemäßen Dachversteifung. Die Anlage umfaßt ein Bad 28, das mit Diisocyanat gefüllt ist, eine Anordnung aus zwei Kalandern 30, 34, eine Benetzungsvorrichtung 32 für einen Katalysator sowie ein Formwerkzeug 40. Der Prozeßverlauf ist in der Zeichnung von rechts nach links orientiert.

Eine Bahn 14 aus Polyurethan-Weichschaum auf Polyesterbasis wird durch das Bad 28 mit Diisocyanat geführt und vollständig getränkt. Der getränkte Schaum wird dann durch den ersten Kalander 30 geführt, dessen Spalt regulierbar ist. Durch den Spaltabstand läßt sich die Menge des Diisocyanats im Schaum regulieren, das überschüssige Diisocyanat fließt in die Auffangwanne zurück und bleibt dem Prozeß erhalten.

Der Gehalt an Diisocyanat beträgt nach den ersten Kalandern 30 etwa zwischen 200 g/m² und 300 g/m². Durch Veränderung der Menge läßt sich die Schaumhärte des später ausgehärteten Bauelements regulieren.

Zwischen dem ersten 30 und dem zweiten Kalander 34 wird das geschäumte Bandmaterial durch die Benetzungsvorrichtung 32 mit einem Katalysator beaufschlagt, der aus einem Gemisch aus Wasser und Amin im Verhältnis 10 zu 1 besteht.

Vor dem zweiten Kalander 34 werden auch eine obere 16 und untere Deckschicht 18 zugeführt, die zusammen mit dem geschäumten Bandmaterial gemeinsam in den zweiten Kalander 34 einlaufen. Die beiden Deckschichten 16, 18 bestehen aus beidseitig beschichteten Kraftlinern, wobei es sich bei den Beschichtungen um Polyolefine handeln kann. Hierbei wird der Kraftliner nicht nur zur Verstärkung des später gebildeten Bauelements verwendet, sondern auch als Schutz des zweiten Kalanders 34 gegen Verschmutzung mit Diisocyanat.

Im zweiten Kalander 34 wird nun der getränkte und mit Katalysator beaufschlagte Schaum gewalkt, wobei sich der Katalysator über die gesamte Breite verteilt.

Nach dem zweiten Kalander 34 läuft der nun gebildete Verbund aus dem geschäumten Bandmaterial und den Deckschichten über einen Speicher 36, der den Übergang von einem kontinuierlichen Vorschub zu einem diskontinuierlichen Betrieb ermöglicht, in das beheizbare Formwerkzeug 40. Dieses bestimmt die Kontur des Formteils. Durch die Beheizung reagiert das Diisocyanat, beschleunigt durch den Katalysator, zu Polyharnstoff aus. Es versteift dabei den Schaum und bindet über die Polyolefinbeschichtungen die Deckschichten.

Der Verbund ist duroplastisch ausgehärtet, wenn er aus dem Formwerkzeug 40 entnommen wird.

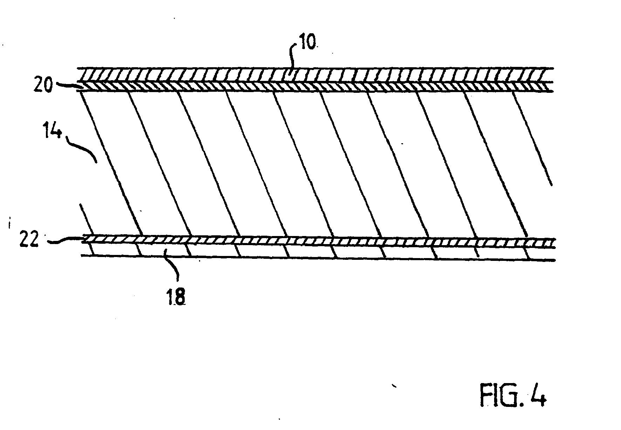

Fig. 4 zeigt eine prinzipielle Darstellung des Schichtaufbaus einer nach einem Verfahren gemäß Anspruch 4 hergestellten Dachversteifung 12 und einer Dachhaut 10.

Die in Fig. 4 dargestellte Dachversteifung 12 besteht aus einer Platte 14 aus Polyurethanschaum und einer Deckschicht 18.

Die Deckschicht 18 trägt sowohl zur Seite der Platte 14 hin als auch auf ihrer nach außen weisenden Seite Beschichtungen. Die nach innen weisende Beschichtung 22 kann aus demselben Material wie die nach außen weisende Beschichtung sein, z.B. aus Polyolefinen. Während die nach innen weisende Beschichtung 22 als Klebeschicht mit der Platte 14 aus Polyurethanschaum dient, nachdem ein den Schaum benetzendes Härte- und Klebemittel mit der Beschichtung 22 reagiert hat, dient die äußere Beschichtung, die in Fig. 4 nicht dargestellt ist, als Wassersperre.

Dieses sogenannte Halbsandwichelement 12 ist an die Form des Daches 10 angepaßt und mit diesem ganz- oder teilflächig verbunden, vorzugsweise über eine Klebeschicht 20 mit diesem verklebt.

Die einseitig mit einer Deckschicht 18 beschichtete Platte 14 läßt sich wegen ihrer wesentlich geringen Steifigkeit ohne vorherige Formgebung an jede beliebige Dachhaut 10 anpassen und in die endgültige Form bringen. Die Steifigkeit der Dachversteifung 12 wird durch Verkleben der unbeschichteten Seite mit der Dachhaut 10 erreicht, wobei der Verbund von Dachhaut 10 und Dachversteifung 12 dann ein Sandwichelement bildet.

Die mechanischen Eigenschaften des fertigen Verbundes aus Halbsandwichelement 12 und Dachhaut 10 entsprechen überraschenderweise denen einer beidseitig mit Deckschichten fest verbundenen Schaumstoffschicht.

## Patentansprüche

1. Verfahren zur Herstellung einer Dachversteifung (12) für Fahrzeuge, bei dem ein Verbund aus einer mittleren Schaumschicht (14) und äußeren Deckschichten (16, 18) von innen an die Dachhaut (10) des Fahrzeugs angebracht wird, **dadurch gekennzeichnet, dass** eine geschäumte Platte (14) oder ein geschäumtes Bandmaterial (14) aus einem Polyurethanweichschaum auf Polyesterbasis hergestellt und anschließend mit einem Härte- und Klebemittel benetzt oder getränkt wird, dass auf die geschäumte Platte (14) oder das geschäumte Bandmaterial (14) dann beidseitig Kraftliner als Deckschichten (16, 18) aufgelegt werden, die selbst oder über eine innere Beschichtung eine Affinität, d.h. eine Bindungsfähigkeit zu dem Härte- und Klebemittel aufweisen, und dass schließlich der Verbund in einem beheizten Werkzeug (40), welches die Kontur des Verbundes bestimmt, verpresst wird, wobei das Härte- und Klebemittel unter dem Einfluss der Wärme ausgehärtet wird.

2. Verfahren nach Anspruch 1, **dadurch gekennzeichnet, dass** die geschäumte Platte (14) oder das geschäumte Bandmaterial (14) durch ein das Härte- und Klebemittel enthaltendes Bad (28) geführt und vollständig getränkt wird, anschließend über einen ersten Kalander (30) mit einstellbarer Spaltbreite geführt wird, wodurch die getränkte Platte (14) oder das getränkte Bandmaterial gewalkt und überschüssiges Härte- und Klebemittel herausgedrückt wird, danach auf beiden Flachseiten der geschäumten Platte (14) oder des geschäumten Bandmaterials (14) Kraftliner als Deckschichten (16, 18) zugeführt werden, diese Deckschichten (16, 18) mit der geschäumten Platte (14) oder dem geschäumten Bandmaterial (14) in einem zweiten Kalander (34) in Kontakt miteinander gebracht werden und schließlich dem beheizten Formwerkzeug (40) zugeführt werden, wobei unter der Wärmeeinwirkung das Härte- und Klebemittel sowohl die geschäumte Platte (14) oder das geschäumte Bandmaterial (14) versteift als auch eine Klebebindung zwischen den Kraftlinern als Deckschichten (16, 18) und der geschäumten Platte (14) oder dem geschäumten Bandmaterial (14) herstellt.

3. Verfahren nach Anspruch 2, **dadurch gekennzeichnet, dass** die geschäumte Platte (14) oder das geschäumte Bandmaterial (14) zwischen dem ersten (30) und zweiten Kalander (34) mit einem Katalysator benetzt wird, der beim Durchlaufen des zweiten Kalanders (34)durch Walken mit dem Härte- und Klebemittel vermischt und über der Breite der geschäumten Platte (14) oder des geschäumten Bandmaterials (14) verteilt wird und im anschließenden Formwerkzeug (40) die Aushärtung des Härte- und Klebemittels beschleunigt.

4. Verfahren zur Herstellung einer Dachversteifung (12) für Fahrzeuge, bei dem ein Verbund mit einer Schaumschicht (14) von innen an die Dachhaut (10) des Fahrzeugs angebracht wird, **dadurch gekennzeichnet, dass** eine geschäumte Platte (14) oder ein geschäumtes Bandmaterial (14) aus einem Polyurethanweichschaum auf Polyesterbasis hergestellt und anschließend mit einem Härte- und Klebemittel benetzt oder getränkt wird, dass auf die geschäumte Platte (14) oder das geschäumte Bandmaterial (14) dann einseitig ein Kraftliner als eine Deckschicht (18) aufgelegt wird, der selbst oder über eine innere Beschichtung eine Affinität, d.h. eine Bindungsfähigkeit zu dem Härte- und Klebemittel aufweist, dass der Verbund in einem beheizten Werkzeug (40) zu einem Verbund ohne oder mit Kontur verpresst wird, wobei das Härte- und Klebemittel unter dem Einfluss der Wärme ausgehärtet wird, und dass schließlich die endgültige Formgebung des Verbundes durch Verklebung der unbeschichteten Seite der Schaumschicht (14) mit der Dachhaut (10) erhalten wird, wobei die Dachhaut (10) selbst eine Deckschicht bildet.

5. Verfahren nach Anspruch 4, **dadurch gekennzeichnet, dass** die geschäumte Platte (14) oder das geschäumte Bandmaterial (14) durch ein das Härte- und Klebemittel enthaltendes Bad (28) geführt und vollständig getränkt wird, anschließend über einen ersten Kalander (30) mit einstellbarer Spaltbreite geführt wird, wodurch die getränkte Platte (14) oder das getränkte Bandmaterial (14) gewalkt und überschüssiges Härte- und Klebemittel herausgedrückt wird, danach auf einer Flachseite der geschäumten Platte (14) oder des geschäumten Bandmaterials (14) ein Kraftliner als Deckschicht (18) zugeführt wird, diese Deckschicht (18) mit der geschäumten Platte (14) oder dem geschäumten Bandmaterial (14) in einem zweiten Kalander (34) in Kontakt miteinander gebracht wird und schließlich dem beheizten Werkzeug (40) zugeführt wird, wobei unter der Wärmeeinwirkung das Härte- und Klebemittel sowohl die geschäumte Platte (14) oder das geschäumte Bandmaterial (14) versteift als auch eine Klebebindung zwischen dem Kraftliner als Deckschicht (18) und der geschäumten Platte (14) oder dem geschäumten Bandmaterial (14) herstellt.

6. Verfahren nach Anspruch 5, **dadurch gekennzeichnet, dass** die geschäumte Platte (14) oder das geschäumte Bandmaterial (14) zwischen dem ersten (30) und zweiten Kalander (34) mit einem Katalysator benetzt wird, der beim Durchlaufen des zweiten Kalanders (34) durch Walken mit dem Härte- und Klebemittel vermischt und über der Breite der geschäumten Platte (14) oder des geschäumten Bandmaterials (14) verteilt wird und im anschließenden Werkzeug (40) die Aushärtung des Härte- und Klebemittels beschleunigt.

7. Nach einem der Ansprüche 1 bis 6 hergestellte Dachversteifung (12), **dadurch gekennzeichnet, dass** als Härte- und Klebemittel Diisocyanat dient.

8. Dachversteifung (12) nach Anspruch 7, **dadurch gekennzeichnet, dass** als Katalysator ein Gemisch aus Wasser und Amin im Verhältnis 10 zu 1 dient.

9. Dachversteifung (12) nach einem der Ansprüche 7 bis 8, **dadurch gekennzeichnet, dass** der Kraftliner als Deckschicht (16, 18) außen und innen mit Beschichtungen (20, 22; 24, 26) aus Polyolefinen versehen ist.

10. Dachversteifung (12) nach einem der Ansprüche 7 bis 9, **dadurch gekennzeichnet, dass** die geschäumte Platte (14) oder das geschäumte Bandmaterial (14) eine Dicke zwischen 5 mm und 10 mm aufweist.

11. Dachversteifung (12) nach einem der Ansprüche 7 bis 10, **dadurch gekennzeichnet, dass** die geschäumte Platte (14) oder das geschäumte Bandmaterial (14) ein ursprüngliches Raumgewicht zwischen 15 kg/m³ und 25 kg/m³, vorzugsweise von 21 Kg/m³ aufweist.

12. Dachversteifung (12) nach einem der Ansprüche 7 bis 11, **dadurch gekennzeichnet, dass** der Gehalt an Härte- und Klebemittel nach dem ersten Kalander (30) vorübergehend zwischen 200 g/m² und 300 g/m² beträgt.

13. Dachversteifung (12) nach einem der Ansprüche 7 bis 12, **dadurch gekennzeichnet, dass** die Deckschicht (16, 18) ein Flächengewicht zwischen 160 g/m² und 200 g/m², vorzugsweise 186 g/m², aufweist.

14. Dachversteifung (12) nach einem der Ansprüche 7 bis 13, **dadurch gekennzeichnet, dass** die äußere und innere Beschichtung (20, 22; 24, 26) ein Flächengewicht zwischen 10 g/m² und 30 g/m², vorzugsweise 20 g/m² aufweist.

## Claims

1. Method for producing a roof stiffener (12) for vehicles, in which an assembly consisting of a central foam layer (14) and outer cover layers (16, 18) is attached to the roof skin (10) of the vehicle from the inside, **characterised in that** a foamed panel (14) or a foamed strip material (14) is produced from a soft polyurethane foam based on polyester and then is wetted or impregnated with a hardener adhesive, **in that** Kraft paperboard is then placed as cover layers (16, 18) on both sides of the foamed panel (14) or the foamed strip material (14), which cover layers have an affinity for, i.e. an ability to bond to, the hardener adhesive either intrinsically or via an inner coating, and **in that** finally the assembly is pressed in a heated mould (40) which determines the contour of the assembly, wherein the hardener adhesive is cured under the effect of the heat.

2. Method according to claim 1, **characterised in that** the foamed panel (14) or the foamed strip material (14) is passed through a bath (28) containing the hardener adhesive and is fully impregnated, then is passed through a first calender (30) with an adjustable nip, as a result of which the impregnated panel (14) or the impregnated strip material is milled and excess hardener adhesive is pressed out, then Kraft paperboard is fed as cover layers (16, 18) onto the two flat sides of the foamed panel (14) or the foamed strip material (14), these cover layers (16, 18) are brought into contact with the foamed panel (14) or the foamed strip material (14) in a second calender (34) and finally are fed to the heated mould (40), wherein, under the effect of heat, the hardener adhesive both stiffens the foamed panel (14) or the foamed strip material (14) and also establishes an adhesive bond between the Kraft paperboard as cover layers (16, 18) and the foamed panel (14) or the foamed strip material (14).

3. Method according to claim 2, **characterised in that**, between the first (30) and the second calender (34), the foamed panel (14) or the foamed strip material (14) is wetted with a catalyst which mixes with the hardener adhesive as a result of milling during the passage through the second calender (34) and is distributed over the width of the foamed panel (14) or the foamed strip material (14) and accelerates the curing of the hardener adhesive in the subsequent mould (40).

4. Method for producing a roof stiffener (12) for vehicles, in which an assembly comprising a foam layer (14) is attached to the roof skin (10) of the vehicle from the inside, **characterised in that** a foamed panel (14) or a foamed strip material (14) is produced from a soft polyurethane foam based on polyester and then is wetted or impregnated with a hardener adhesive, **in that** Kraft paperboard is then placed as a cover layer (18) on one side of the foamed panel (14) or the foamed strip material (14), which cover layer has an affinity for, i.e. an ability to bond to, the hardener adhesive either intrinsically or via an inner coating, **in that** the assembly is pressed in a heated mould (40) to form an assembly without or with a contour, wherein the hardener adhesive is cured under the effect of the heat, and **in that** finally the final shape of the assembly is obtained by adhesively bonding the uncoated side of the foam layer (14) to the roof skin (10), wherein the roof skin (10) itself forms a cover layer.

5. Method according to claim 4, **characterised in that** the foamed panel (14) or the foamed strip material (14) is passed through a bath (28) containing the hardener adhesive and is fully impregnated, then is passed through a first calender (30) with an adjustable nip, as a result of which the impregnated panel (14) or the impregnated strip material (14) is milled and excess hardener adhesive is pressed out, then Kraft paperboard is fed as a cover layer (18) onto one flat side of the foamed panel (14) or the foamed strip material (14), this cover layer (18) is brought into contact with the foamed panel (14) or the foamed strip material (14) in a second calender (34) and finally is fed to the heated mould (40), wherein, under the effect of heat, the hardener adhesive both stiffens the foamed panel (14) or the foamed strip material (14) and also establishes an adhesive bond between the Kraft paperboard as the cover layer (18) and the foamed panel (14) or the foamed strip material (14).

6. Method according to claim 5, **characterised in that**, between the first (30) and the second calender (34), the foamed panel (14) or the foamed strip material (14) is wetted with a catalyst which mixes with the hardener adhesive as a result of milling during the passage through the second calender (34) and is distributed over the width of the foamed panel (14) or the foamed strip material (14) and accelerates the curing of the hardener adhesive in the subsequent mould (40).

7. Roof stiffener (12) produced according to one of claims 1 to 6, **characterised in that** diisocyanate is used as the hardener adhesive.

8. Roof stiffener (12) according to claim 7, **characterised in that** a mixture of water and amine in a ratio of 10 to 1 is used as the catalyst.

9. Roof stiffener (12) according to one of claims 7 to 8, **characterised in that** the Kraft paperboard as the cover layer (16, 18) is provided with polyolefin coatings (20, 22; 24, 26) on the outer and inner side.

10. Roof stiffener (12) according to one of claims 7 to 9, **characterised in that** the foamed panel (14) or the foamed strip material (14) has a thickness of between 5 mm and 10 mm.

11. Roof stiffener (12) according to one of claims 7 to 10, **characterised in that** the foamed panel (14) or the foamed strip material (14) has an original weight per unit volume of between 15 kg/m³ and 25 kg/m³, preferably 21 kg/m³.

12. Roof stiffener (12) according to one of claims 7 to 11, **characterised in that** the content of hardener adhesive after the first calender (30) is predominantly between 200 g/m² and 300 g/m².

13. Roof stiffener (12) according to one of claims 7 to 12, **characterised in that** the cover layer (16, 18) has a weight per unit area of between 160 g/m² and 200 g/m², preferably 186 g/m².

14. Roof stiffener (12) according to one of claims 7 to 13, **characterised in that** the outer and inner coating (20, 22; 24, 26) has a weight per unit area of between 10 g/m² and 30 g/m², preferably 20 g/m².

## Revendications

1. Procédé de fabrication d'un renfort de pavillon (12) de véhicules automobiles, suivant lequel un composite comprenant une couche de mousse centrale (14) et des couches de recouvrement extérieures (16, 18) est fixé depuis l'intérieur sur la couverture de toit (10) du véhicule automobile, **caractérisé en ce qu'**une plaque expansée (14) ou un matériau en bandes expansé (14) est réalisé dans une mousse souple de polyuréthane à base de polyester, puis humecté ou imprégné d'un agent durcisseur et adhésif, qu'un papier couverture Kraft est posé, ensuite, comme couche de couverture (16, 18), sur chaque côté de la plaque expansée (14) ou du matériau en bandes expansé, les couches de couverture présentant une affinité, à savoir un pouvoir de liaison avec l'agent durcisseur et adhésif par elles-mêmes ou par l'intermédiaire d'un revêtement interne et **en ce que** le composite est finalement compressé dans un outil chauffé (40) qui détermine le contour du composite, l'agent durcisseur et adhésif durcissant sous l'influence de la chaleur.

2. Procédé suivant la revendication 1, **caractérisé en ce que** la plaque expansée (14) ou le matériau en bandes expansé (14) est passé à travers un bain contenant l'agent durcisseur et adhésif, où la plaque expansée (14) ou le matériau en bandes expansé (14) est intégralement imprégné, puis à travers une première calandre (30) avec une largeur de fente réglable, ce qui entraîne un foulage de la plaque (14) imprégnée ou du matériau en bandes imprégné et une extraction de l'excédent de l'agent durcisseur et adhésif, **en ce qu'**un papier couverture Kraft servant de couche de couverture est amené aux deux côtés plats de la plaque expansée (14) ou du matériau en bandes expansé (14), que ces couches de couverture (16, 18) sont mises en contact avec la plaque expansée (14) ou le matériau en bandes expansé (14) dans une seconde calandre (34) et amenées finalement à l'outil de formage chauffé (40), l'agent durcisseur et adhésif entraînant non seulement un raidissement de la plaque expansée (14) ou du matériau en bandes expansé (14), mais encore une liaison par collage entre le papier couverture Kraft servant de couche de couverture (16, 18) et la plaque expansée (14) ou le matériau en bandes expansé (14).

3. Procédé suivant la revendication 2, **caractérisé en ce que**, entre la première calandre (30) et la seconde calandre (34), la plaque expansée (14) ou le matériau en bandes expansé (14) est humecté d'un catalyseur qui se mélange à l'agent durcisseur et adhésif grâce au foulage lors du passage de la seconde calandre (34), qui est réparti sur toute la largeur de la plaque expansée (14) ou du matériau en bandes expansé (14) et qui accélère le durcissement de l'agent durcisseur et adhésif dans l'outil de formage qui suit.

4. Procédé de fabrication d'un renfort de pavillon (12) de véhicules automobiles, suivant lequel un composite comprenant une couche expansée (14) est fixé à la couverture de toit (10) du véhicule depuis l'intérieur, **caractérisé en ce que** l'on fabrique une plaque expansée (14) ou un matériau en bandes expansé (14) dans une mousse souple de polyuréthane à base de polyester, que l'on humecte ou imprègne ensuite d'un agent durcisseur et adhésif, **en ce qu'**un papier couverture Kraft, qui présente une affinité, c'est-à-dire un pouvoir de liaison avec l'agent durcisseur et adhésif par lui-même ou par l'intermédiaire d'un revêtement interne, est posé en tant que couche de couverture (18) sur un côté de la plaque expansée (14) ou du matériau en bandes expansé (14), que le composite est comprimé dans un outil chauffé (40) en un composite sans ou avec contour, l'agent durcisseur et adhésif étant durci sous l'influence de la chaleur et **en ce que** la conformation définitive du composite est finalement conservée par collage du côté non revêtu de la couche de mousse (14) avec la couverture de toit, celle-ci formant elle-même une couche de couverture.

5. Procédé suivant la revendication 4, **caractérisé en ce que** la plaque expansée (14) ou le matériau en bandes expansé (14) est passé dans un bain (28) contenant l'agent durcisseur et adhésif, dans lequel la plaque expansée (14) ou le matériau en bandes expansé (14) est entièrement imprégné, après quoi la plaque expansée (14) ou le matériau en bandes expansé (14) est passé par une première calandre (30) avec une largeur de fente réglable, ce qui entraîne un foulage de la plaque imprégnée (14) ou du matériau en bandes imprégné (14) et une extraction de l'excès de l'agent durcisseur et adhésif, **en ce qu'** un papier couverture Kraft est amené, ensuite, sur un côté plat de la plaque expansée (14) ou du matériau en bandes expansé (14), **en ce que** cette couche de couverture (18) est mise en contact avec la plaque expansée (14) ou le matériau en bandes expansé (14) dans une seconde calandre (34), puis amenée à l'outil chauffé (40), l'agent durcisseur et adhésif entraînant sous l'influence de la chaleur un raidissement de la plaque expansée (14) ou du matériau en bandes expansé (14), ainsi qu'une liaison par collage entre le papier couverture Kraft, qui sert de couche de couverture (18), et la plaque expansée (14) ou le matériau en bandes expansé (14).

6. Procédé suivant la revendication 5, **caractérisé en ce que**, entre la première et la seconde calandre (34), la plaque expansée (14) ou le matériau en bandes expansé (14) est humecté d'un catalyseur, qui se mélange à l'agent durcisseur et adhésif grâce au foulage lors du passage de la seconde calandre (34), qui est réparti sur toute la largeur de la plaque expansée (14) ou du matériau en bandes expansé (14) et qui accélère le durcissement de l'agent durcisseur et adhésif dans l'outil (40) qui suit.

7. Renfort de pavillon (12) fabriqué suivant une des revendications 1 à 6, **caractérisé en ce que** du diisocyanate sert d'agent durcisseur et adhésif.

8. Renfort de pavillon (12) suivant la revendication 7, **caractérisé en ce que** le catalyseur est un mélange d'eau et d'amine dans la proportion de 10 :1.

9. Renfort de pavillon (12) suivant une des revendications 7 à 8, **caractérisé en ce que** le papier couverture Kraft, qui sert de couche de couverture (16, 18), est pourvu à l'extérieur et à l'intérieur de revêtements (20, 22 ; 24, 26) à base de polyoléfines.

10. Renfort de pavillon (12) suivant une des revendications 7 à 9, **caractérisé en ce que** la plaque expansée (14) ou le matériau en bandes expansé (14) présente une épaisseur comprise entre 5 mm et 10 mm.

11. Renfort de pavillon (12) suivant une des revendications 7 à 10, **caractérisé en ce que** la plaque expansée (14) ou le matériau en bandes expansé (14) présente un poids spécifique initial compris entre 15 kg/m³ et 25 kg/m³, de préférence de 21 kg/m³.

12. Renfort de pavillon (12) suivant une des revendications 7 à 11, **caractérisé en ce que**, après la première calandre, la teneur en agent durcisseur et adhésif est comprise temporairement entre 200 g/m² et 300 g/m².

13. Renfort de pavillon (12) suivant une des revendications 7 à 12, **caractérisé en ce que** la couche de couverture (15, 18) présente un grammage compris entre 160 g/m² et 200 g/m², de préférence de 186 g/m².

14. Renfort de pavillon (12) suivant une des revendications 7 à 13, **caractérisé en ce que** les revêtements extérieur et intérieur (20, 22 ; 24, 26) présentent un grammage compris entre 10 g/m² et 30 g/m², de préférence de 20 g/m².
